# EUROPEAN PATENT APPLICATION

(11) **EP 3 471 183 A1**
(43) Date of publication of application: **17.04.2019**
(21) Application number: 17877241.4
(22) Date of filing: 25.10.2017
(51) Int. Cl.: H01M 8/04

(54) **METHOD, DEVICE AND SYSTEM FOR CONTROLLING FUEL CELLS AND RAIL VEHICLE**

(30) Priority: 30.11.2016 CN 201611086331
(71) Applicant: CRRC Qingdao Sifang Co., Ltd., Qingdao, Shandong 26611 (CN)
(72) Inventor: WU, Donghua, Qingdao Shandong 266111 (CN); LI, Yankun, Qingdao Shandong 266111 (CN); TIAN, Qing, Qingdao Shandong 266111 (CN); ZHANG, Huiqing, Qingdao Shandong 266111 (CN); XIAO, Chanjuan, Qingdao Shandong 266111 (CN); HAN, Qingjun, Qingdao Shandong 266111 (CN); YAO, Zhengbin, Qingdao Shandong 266111 (CN)
(74) Representative: Fioravanti, Corrado
(86) International application number: PCT/CN2017/107622
(87) International publication number: WO 2018/099211

(57) **Abstract**

A method, device and system for controlling a fuel cell and a rail vehicle are provided. The method includes: an operating power of a target object is detected, wherein the target object is powered by at least two fuel cells (S102); when it is detected that the operating power of the target object is lower than a predetermined power, at least one fuel cell is turned off or a cell component in any one or more fuel cells is turned off according to a gas conversion range corresponding to the fuel cell (S104), wherein the gas conversion range is an output power range value, of the fuel cell, corresponding to a preset range value of a hydrogen conversion rate of the fuel cell. The method solves a technical problem in the related art of low hydrogen conversion rate of the fuel cell in the case of low power of an electrical appliance caused by the fact that the automatic control cannot be implemented on a plurality of fuel cells according to the operating power of the electrical appliance.

## Description

### Technical Field

The present disclosure relates to the field of fuel cell control, and in particular to a method, device and system for controlling a fuel cell and a rail vehicle.

### Background

A fuel cell is a device which directly converts chemical energy of hydrogen and oxygen into electrical energy through an electrode reaction. Because combustion is not involved in the reaction process of the fuel cell, and the energy conversion efficiency of the fuel cell is not limited by a Carnot cycle, a very high generating efficiency can be achieved. Therefore, the fuel cell, as a pollution-free new energy with a high thermal conversion rate, is widely used in a power supply system of a tramcar and metro, and powers an air conditioner, a lamp and a television in a carriage.

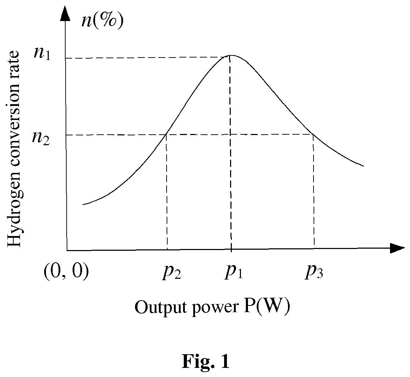

At present, at least two fuel cells may be used to power the air conditioner of the metro. Aiming at the above power supply mode of the fuel cell, the solution adopted by the related art is that two fuel cells operate simultaneously to power the air conditioner. Because most of the existing air conditioners are variable frequency air conditioners, after the temperature reaches the environment temperature, the air conditioner enters a low power working state. After an operating power of the air conditioner is reduced, the power supply needed by the air conditioner is reduced, so if two fuel cells still operate simultaneously, output powers of both of the two fuel cells will be reduced. When the fuel cell is at the lower output power, the generating efficiency of the fuel cell, namley the efficiency of converting the hydrogen into the electrical energy is very low, thereby causing the waste of hydrogen energy source. Fig. 1 shows a schematic diagram of a relationship between a hydrogen conversion rate and an output power of the fuel cell. The horizontal axis in Fig. 1 is the output power P of the fuel cell, whose element is watts expressed by W; and the vertical axis in Fig. 1 is the hydrogen conversion rate n, which is a ratio expressed by the centesimal system. It can be seen from Fig. 1 that in a certain range, the hydrogen conversion rate increases with the increase of the output power. When the power supply needed by an electrical appliance (for example, the air conditioner) decreases, the output power of the fuel cell is reduced too. If the output power of the fuel cell is reduced from p₁ to p₂, the hydrogen conversion rate is reduced from n₁ to n₂.

Aiming at a technical problem in the related art of low hydrogen conversion rate of the fuel cell in the case of low power of an electrical appliance caused by the fact that the automatic control cannot be implemented on a plurality of fuel cells according to the operating power of the electrical appliance, an effective solution has not been presented yet.

### Summary

The embodiments of the present disclosure provide a method, device and system for controlling a fuel cell and a rail vehicle, which may at least solve a technical problem in the related art of low hydrogen conversion rate of the fuel cell in the case of low power of an electrical appliance caused by the fact that the automatic control cannot be implemented on a plurality of fuel cells according to the operating power of the electrical appliance.

According to an aspect of the embodiments of the present disclosure, a method for controlling a fuel cell is provided. The method includes: an operating power of a target object is detected, wherein the target object is powered by at least two fuel cells; when it is detected that the operating power of the target object is lower than a predetermined power, at least one fuel cell is turned off or a cell component in any one or more fuel cells is turned off according to a gas conversion range corresponding to the fuel cell, wherein the gas conversion range is an output power range value, of the fuel cell, corresponding to a preset range value of a hydrogen conversion rate of the fuel cell.

According to another aspect of the embodiments of the present disclosure, a device for controlling a fuel cell is also provided. The device includes: a detecting component, configured to detect an operating power of a target object, wherein the target object is powered by at least two fuel cells; a turning-off component, configured to, when it is detected that the operating power of the target object is lower than a predetermined power, turn off at least one fuel cell or turn off a cell component in any one or more fuel cells according to a gas conversion range corresponding to the fuel cell, wherein the gas conversion range is an output power range value, of the fuel cell, corresponding to the preset range value of a hydrogen conversion rate of the fuel cell.

According to yet another aspect of the embodiments of the present disclosure, a system for controlling a fuel cell is also provided. The system includes: a fuel cell and a controller. The fuel cell is configured to, after a rail vehicle is powered on, power an auxiliary system of the rail vehicle. The controller is configured to detect an operating power of a target object, and when it is detected that the operating power of the target object is lower than a predetermined power, turn off at least one fuel cell or turn off the cell component in any one or more fuel cells according to a gas conversion range corresponding to the fuel cell, wherein the gas conversion range is an output power range value, of the fuel cell, corresponding to a preset range value of a hydrogen conversion rate of the fuel cell. The target object is powered by at least two fuel cells.

According to yet another aspect of the embodiments of the present disclosure, a rail vehicle is also provided, which includes the system for controlling the fuel cell.

In the embodiments of the present disclosure, a mode of controlling the fuel cell to power according to the operating power of an electrical appliance is adopted. An operating power of a target object is detected, wherein the target object is powered by at least two fuel cells; when it is detected that the operating power of the target object is lower than a predetermined power, at least one fuel cell is turned off or the cell component in any one or more fuel cells is turned off according to a gas conversion range corresponding to the fuel cell, wherein the gas conversion range is an output power range value, of the fuel cell, corresponding to a preset range value of a hydrogen conversion rate of the fuel cell. In this way, the purpose that the output power of each fuel cell in a power supply state is high is achieved, thereby achieving the technical effect of improving the hydrogen conversion rate of the fuel cell and reducing the power consumption of the fuel cell, and solving the technical problem in the related art of low hydrogen conversion rate of the fuel cell in the case of low power of the electrical appliance caused by the fact that the automatic control cannot be implemented on a plurality of fuel cells according to the operating power of the electrical appliance.

### Brief Description of the Drawings

The accompanying drawings described here are used for providing further understanding of the present disclosure, and constitute a part of the present application. Schematic embodiments of the present disclosure and description thereof are used for illustrating the present disclosure and not intended to form an improper limit to the present disclosure. In the accompanying drawings:
Fig. 1 is a schematic diagram of a relationship between a hydrogen conversion rate and an output power of the fuel cell according to a related art;
Fig. 2 is a flowchart of a method for controlling a fuel cell according to an embodiment of the present disclosure;
Fig. 3 is a schematic diagram of a cell component group of the fuel cell according to an embodiment of the present disclosure;
Fig. 4 is a flowchart of an alternative method for controlling a fuel cell according to an embodiment of the present disclosure;
Fig. 5 is a flowchart of an alternative method for controlling a fuel cell according to an embodiment of the present disclosure;
Fig. 6 is a flowchart of an alternative method for controlling a fuel cell according to an embodiment of the present disclosure;
Fig. 7 is a schematic diagram of a device for controlling a fuel cell according to an embodiment of the present disclosure; and
Fig. 8 is a schematic diagram of a system for controlling a fuel cell according to an embodiment of the present disclosure.

### Detailed Description

In order to make those skilled in the art understand the solutions of the present disclosure better, the technical solutions in the embodiments of the present disclosure are clearly and completely elaborated below in combination with the accompanying drawings. It is apparent that the described embodiments are only a part of the embodiments of the present disclosure but not all. Based on the embodiments of the present disclosure, all the other embodiments obtained by those of ordinary skill in the art on the premise of not contributing creative effort should belong to the protection scope of the present disclosure.

It is to be noted that the terms like "first" and "second" in the specification, claims and accompanying drawings of the present disclosure are used for differentiating the similar objects, but do not have to describe a specific order or a sequence. It should be understood that the objects may be exchanged under appropriate circumstances, so that the embodiments of the present disclosure described here may be implemented in an order different from that described or shown here. Moreover, the terms like "include" and "have" and any variation of them are intended to cover nonexclusive including; for example, the process, method, system, product or device including a series of steps or elements do not have to be limited to those clearly listed steps or elements, but may include other steps or elements which are not clearly listed or inherent in these process, method, system, product or device.

### First embodiment

According to the embodiments of the present disclosure, an embodiment of a method for controlling a fuel cell is provided. It is to be noted that these steps presented in the flowchart of the accompanying drawings can be executed in a computer system like a group of computer executable instructions, and moreover, although a logical sequence is shown in the flowchart, in some cases, the presented or described steps can be performed in a sequence different from that described here.

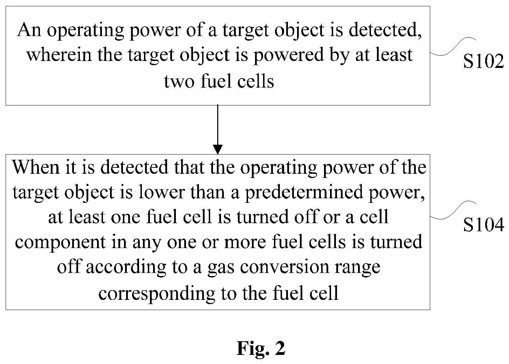

Fig. 2 shows the method for controlling a fuel cell according to an embodiment of the present disclosure. As shown in Fig. 2, the method includes the following steps.

At S102, an operating power of a target object is detected, wherein the target object is powered by at least two fuel cells.

In the above step, the target object may be an electrical appliance powered by the fuel cell, for example, an air conditioner, a lamp, and a television. The target object is powered by one or more fuel cells. Because there is a certain relationship between the hydrogen conversion rate and the output power of the fuel cell, and the output power of the fuel cell is related to the operating power of the electrical appliance powered by the fuel cell, in order to obtain the output power of the fuel cell, it is first needed to detect the operating power of the target object.

At S104, when it is detected that the operating power of the target object is lower than the predetermined power, at least one fuel cell is turned off or a cell component in any one or more fuel cells is turned off according to a gas conversion range corresponding to the fuel cell, wherein the gas conversion range is an output power range value, of the fuel cell, corresponding to a preset range value of the hydrogen conversion rate of the fuel cell.

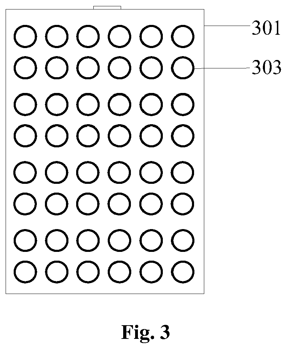

In the above step, the cell component may be a element forming a fuel cell stack, and a cell stack may be formed by assembling a certain number of cell components according to a certain requirement. Fig. 3 shows a schematic diagram of a cell component group of the fuel cell. The number 301 is the cell component group formed by the cell components, and the number 303 is the cell component forming the cell component group. Each fuel cell may include one or more cell component groups. When it is detected that the operating power of the target object (for example, the air conditioner) is lower than a certain predetermined power, one or more fuel cells powering the target object may be selected and turned off through a certain regulating policy; in at least one alternative embodiment, the cell component in one or more fuel cells may be turned off.

It is to be noted that in the case of turning off at least one fuel cell or turning off the cell component in any one or more fuel cells according to the gas conversion range corresponding to the fuel cell, the output power of other fuel cells which are not turned off or cell components which are not turned off is improved.

As an alternative implementation, the above embodiment of the application is elaborated by taking the air conditioner for example. The fuel cell system powering the air conditioner includes two groups of fuel cells. According to actual requirements of the air conditioner, a working relationship between two fuel cells is regulated (for example, one of the two fuel cells is turned off) in case of low power output, so as to ensure the maximum hydrogen conversion rate.

It is to be noted that most of the existing air conditioners are variable frequency air conditioners, after the air conditioner is turned on and the environment temperature reaches a preset temperature, in order to keep the environment temperature always at the preset temperature, the variable frequency air conditioner reduces its operating power, so as to prevent the environment temperature from continuing increasing or decreasing. Therefore, the air conditioner often runs in a low power state.

As at least one alternative embodiment, when the air conditioner runs in the low power state, one fuel cell, or the fuel cell stack (the cell component) in each cell component group (the fuel cell) and the auxiliary devices (a circulating water pump, an air compressor, and so on) may be turned off through a certain regulating policy, and the power output of another fuel cell is improved to satisfy a power demand of an air conditioner load.

As at least one alternative embodiment, when an operating period of a group of fuel cells reaches a certain period, it is possible to switch to another group of fuel cells to operate.

From the above, in the above embodiment of the application, the operating power of the target object (the electrical appliance) is detected, and when the target object (the electrical appliance) runs in the low power state, one or more fuel cells powering the target object is turned off, and the output power of the rest fuel cells is improved; moreover, in order to reduce the number of times of the whole fuel cell, the cell component in one or more fuel cells may be selected and turned off. In this way, the purpose that the output power of each fuel cell in the power supply state is high is achieved, thereby achieving the technical effect of improving the hydrogen conversion rate of the fuel cell and reducing the power consumption of the fuel cell, and solving the technical problem in the related art of low hydrogen conversion rate of the fuel cell in the case of low power of the electrical appliance caused by the fact that the automatic control cannot be implemented on a plurality of fuel cells according to the operating power of the electrical appliance.

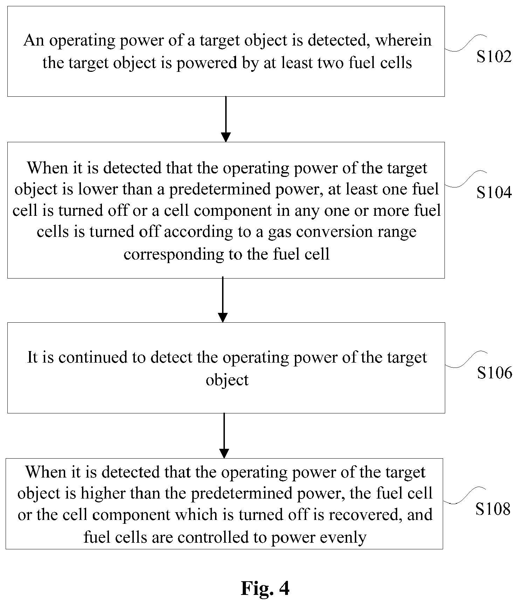

In an exemplary embodiment, as shown in Fig. 4, after at least one fuel cell is turned off or the cell component in any one or more fuel cells is turned off according to the gas conversion range corresponding to the fuel cell, the method further includes the following steps.

At S106, it is continued to detect the operating power of the target object.

At S108, when it is detected that the operating power of the target object is higher than the predetermined power, the fuel cell or the cell component which is turned off is recovered, and fuel cells are controlled to power evenly.

In the above steps, after at least one fuel cell is turned off or the cell component in any one or more fuel cells is turned off according to the gas conversion range corresponding to the fuel cell, it is needed to continue to detect the operating power of the target object (the electrical appliance), and determine whether the operating power of the electrical appliance is higher than the predetermined power. When it is detected that the operating power of the electrical appliance is higher than the predetermined power, the fuel cell or the cell component which is turned off is turned on again, and the output power of each fuel cell is calculated according to the operating power of the electrical appliance, thereby controlling each fuel cell to power evenly.

As an alternative implementation, the above embodiment of the application is elaborated still by taking the air conditioner for example. A fuel cell system powering the air conditioner includes two groups of fuel cells. After one fuel cell or the fuel cell stack (the cell component) in each cell component group (the fuel cell) and the auxiliary devices (the circulating water pump, the air compressor, and so on) is turned off, it is continued to detect the operating power of the air conditioner. When the detected operating power of the air conditioner is higher than the predetermined power, the fuel cell stack (the cell component) in another fuel cell or each cell component group (the fuel cell) is turned on, and the output power of each fuel cell is calculated according to the current operating power of the air conditioner, thereby controlling the two fuel cells to power evenly.

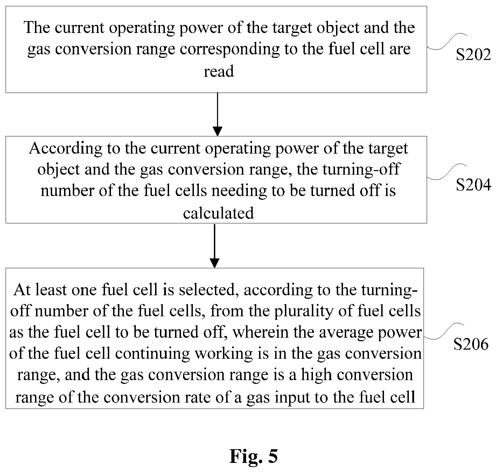

Alternatively, in an exemplary embodiment, as shown in Fig. 5, the target object is powered by a plurality of fuel cells. Before at least one fuel cell is turned off, the method further includes the following steps.

At S202, the current operating power of the target object and the gas conversion range corresponding to the fuel cell are read.

At S204, according to the current operating power of the target object and the gas conversion range, the turning-off number of the fuel cells needing to be turned off is calculated.

At S206, at least one fuel cell is selected, according to the turning-off number of the fuel cells, from the plurality of fuel cells as the fuel cell to be turned off, wherein an average power of the fuel cell continuing working is in the gas conversion range, and the gas conversion range is a high conversion range of the conversion rate of a gas input to the fuel cell.

In the above steps, the gas conversion range is an output power range value, of the fuel cell, corresponding to a range value of the high hydrogen conversion rate of the fuel cell. As at least one alternative embodiment, as shown in Fig. 1, it can be seen from the hydrogen conversion rate represented by the vertical axis that when the output power of the fuel cell is in the range of p₂ to p₃, the corresponding hydrogen conversion rate of the fuel cell is in a higher range, namely n₂ to n₁. When the target object (the electrical appliance) is powered by a plurality of fuel cells, the turning-off number of the fuel cells needing to be turned off may be calculated according to the current operating power of the electrical appliance and the gas conversion range of the fuel cell. Then, at least one fuel cell is selected, according to the turning-off number of the fuel cells, from the plurality of fuel cells as the fuel cell to be turned off, and the fuel cell not being turned off continues operating, wherein the average power of the fuel cell continuing working is in the gas conversion range, and the gas conversion range is the high conversion range of the conversion rate of the gas input to the fuel cell.

The above embodiment is elaborated still by taking the air conditioner for example. When the current operating power of the air conditioner load is reduced to 30kw, the high conversion rate range corresponding to the fuel cell is p₂ to p₃, wherein the p₂ is equal to 10kw, p₃ is equal to 30kw, and an optimal value p₁ is 15kw. When three fuel cells may be provided to power, it may be considered to turn off one or two fuel cells. When two fuel cells are turned off, and one fuel cell is reserved, at this point, the output power of this fuel cell is 30kw. Because 30kw is not the optimum conversion rate, as at least one alternative embodiment, it is possible to select and turn off one fuel cell stack, at this point, the average output power of two fuel cells is 15kw, which happens to be the optimum conversion rate.

Based on the above embodiment, alternatively, if the value of the optimum conversion rate is 10kw, it may be considered to control the output power of one of the two fuel cells to be 10kw, and then the output power of another fuel cell may be 20kw.

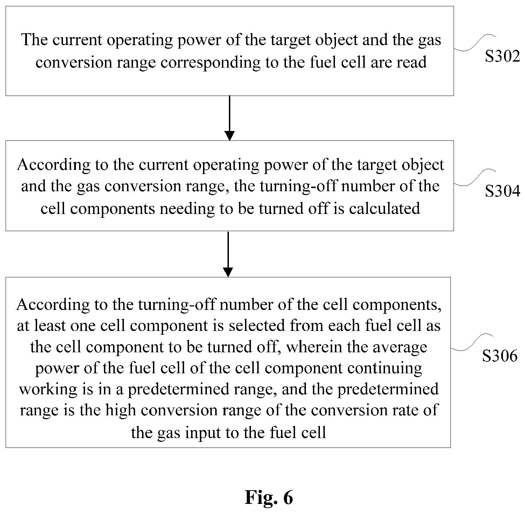

As at least one alternative embodiment, in another exemplary embodiment, as shown in Fig. 6, in the case of using a plurality of fuel cells to power the target object and forbidding turning off the whole fuel cell, before turning off the cell component in one or more fuel cells, the method further includes the following steps.

At S302, the current operating power of the target object and the gas conversion range corresponding to the fuel cell are read.

At S304, according to the current operating power of the target object and the gas conversion range, the turning-off number of the cell components needing to be turned off is calculated.

At S306, according to the turning-off number of the cell components, at least one cell component is selected from each fuel cell as the cell component to be turned off, wherein the average power of the fuel cell of the cell component continuing working is in a predetermined range, and the predetermined range is the high conversion range of the conversion rate of the gas input to the fuel cell.

In the above steps, because the fuel cell component group is formed by a plurality of components of the component group. The turning-off number of the cell components needing to be turned off may be calculated according to the current operating power of the target object and the gas conversion range, and at least one fuel cell is selected, according to the turning-off number of the cell components, from a plurality of fuel cells as the cell component to be turned off, and the cell component not being turned off continues operating. The average power of the fuel cell of the cell component continuing operating is in the gas conversion range, which is the high conversion range of the conversion rate of the gas input to the fuel cell.

Through the above steps, the cell component group is not turned off as a whole, but the component of each cell component group is controlled to be turned on and off, thereby reducing the drain of the cell caused by turning off the fuel cell component group as a whole for many times, and obtaining better control flexibility.

In an exemplary embodiment, the assistant device of the whole fuel cell is turned off while the whole fuel cell is turned off; when the cell component in the fuel cell is turned off, the assistant device of the fuel cell is not turned off or the operating power of the assistant device of the fuel cell is reduced.

It is easy to be noted that the above embodiment includes two scenarios. The first scenario is that the turning-off number of the fuel cells to be turned off is calculated according to the current operating power of the target object, a part of the cell component groups are turned off, and a part of the cell component groups are not turned off, or merely the component of the component group is turned off. The second scenario is that the turning-off number of the cell components turned off is calculated according to the current operating power of the target object, all the cell component groups are not turned off, but the cell components needing to be turned off, which are determined according to the power demand, are turned off. The difference between turning off a group of cell component groups and turning off a cell stack is that if the cell component group is turned off, all the assistant devices are turned off, and when merely a part of cell stack components in a certain component group are turned off, there is no need to turn off the corresponding assistant devices, but the power of a group of assistant devices corresponding to the cell component group is reduced.

In an exemplary embodiment, after at least one fuel cell is turned off or the cell component in any one or more fuel cells is turned off according to the gas conversion range corresponding to the fuel cell, the method further includes: after a predetermined period, the fuel cell or the cell component which is turned off is turned on again.

### Second embodiment

According to the embodiments of the present disclosure, an embodiment of a device for controlling a fuel cell is also provided. The method for controlling a fuel cell in the first embodiment of the present disclosure may be performed in the device provided in the second embodiment of the present disclosure.

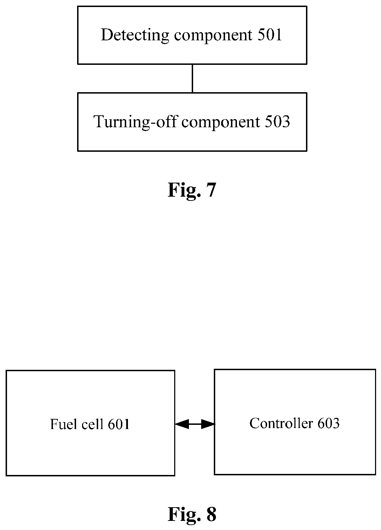

Fig. 7 is a schematic diagram of the device for controlling a fuel cell according to an embodiment of the present disclosure. As shown in Fig. 7, the device includes: a detecting component 501 and a turning-off component 503.

The detecting component 501 is configured to detect an operating power of a target object, wherein the target object is powered by at least two fuel cells.

The turning-off component 503 is configured to, when it is detected that the operating power of the target object is lower than the predetermined power, turn off at least one fuel cell or turn off the cell component in any one or more fuel cells according to a gas conversion range corresponding to the fuel cell. The gas conversion range is an output power range value, of the fuel cell, corresponding to a preset range value of a hydrogen conversion rate of the fuel cell.

It is to be noted that the detecting component and the turning-off component may run in a computer terminal as a part of the device. The functions implemented by the components may be performed by the computer terminal. The computer terminal may also be a smartphone (such as an Android phone and an iOS phone), a tablet PC, an IPDA, a Mobile Internet Device (MID), a PAD and other terminal devices.

From the above, in the above embodiment of the application, the operating power of the target object (the electrical appliance) is detected, and when the target object (the electrical appliance) runs in the low power state, one or more fuel cells powering the target object are turned off, and the output power of the rest fuel cells is improved; moreover, in order to reduce the number of times of the whole fuel cell, the cell component in one or more fuel cells may be selected and turned off. In this way, the purpose that the output power of each fuel cell in the power supply state is high is achieved, thereby achieving the technical effect of improving the hydrogen conversion rate of the fuel cell and reducing the power consumption of the fuel cell, and solving the technical problem in the related art of low hydrogen conversion rate of the fuel cell in the case of low power of the electrical appliance caused by the fact that the automatic control cannot be implemented on a plurality of fuel cells according to the operating power of the electrical appliance.

In an exemplary embodiment, the device further includes: a processing component, which is configured to, in the case of turning off at least one fuel cell or turning off the cell component in any one or more fuel cells according to the gas conversion range corresponding to the fuel cell, improve the output power of other fuel cells or cell components which are not turned off.

It is to be noted that the processing component may run in the computer terminal as a part of the device. The function implemented by the component may be performed by the computer terminal. The computer terminal may also be the smartphone (such as the Android phone and the iOS phone), the tablet PC, the IPDA, the MID, the PAD and other terminal devices.

In an exemplary embodiment, after at least one fuel cell is turned off or the cell component in any one or more fuel cells is turned off according to the gas conversion range corresponding to the fuel cell, the detecting component is further configured to continue detecting the operating power of the target object; the processing component is further configured to, when it is detected that the operating power of the target object is higher than the predetermined power, recover the fuel cell or the cell component which is turned off, and control fuel cells to power evenly.

In an exemplary embodiment, the device further includes: a reading component, a calculating component, and a performing component. The reading component is configured to read the current operating power of the target object and the gas conversion range corresponding to the fuel cell. The calculating component is configured to calculate, according to the current operating power of the target object and the gas conversion range, the turning-off number of the fuel cells needing to be turned off. The performing component is configured to select, according to the turning-off number of the fuel cells, at least one fuel cell from the plurality of fuel cells as the fuel cell to be turned off, wherein the average power of the fuel cell continuing working is in the gas conversion range, and the gas conversion range is the high conversion range of the conversion rate of the gas input to the fuel cell.

In another exemplary embodiment, the calculating component is further configure to calculate, according to the current operating power of the target object and the gas conversion range, the turning-off number of the cell components needing to be turned off; the performing component is further configured to select, according to the turning-off number of the cell components, at least one fuel cell from a plurality of fuel cells as the cell component to be turned off. The average power of the fuel cell of the cell component to be turned off is in the predetermined range, which is the high conversion range of the conversion rate of the gas input to the fuel cell.

It is to be noted that the reading component, the calculating component and the performing component may run in the computer terminal as a part of the device. The functions implemented by the components may be performed by the computer terminal. The computer terminal may also be the smartphone (such as the Android phone and the iOS phone), the tablet PC, the IPDA, the MID, the PAD and other terminal devices.

It is to be noted that the turning-off component is further configured to turn off the assistant device of the whole fuel cell while turning off the whole fuel cell; the processing component is further configured to, in the case of turning off the cell component in the fuel cell, not turn off the assistant device of the fuel cell or reduce the operating power of the assistant device of the fuel cell.

In an exemplary embodiment, the device further includes: a component of turning on again, which is configured to, after the predetermined period, turn on again the fuel cell or the cell component which is turned off.

It is to be noted that the component of turning on again may run in the computer terminal as a part of the device. The function implemented by the component may be performed by the computer terminal. The computer terminal may also be the smartphone (such as the Android phone and the iOS phone), the tablet PC, the IPDA, the MID, the PAD and other terminal devices.

### Third embodiment

According to the embodiments of the present disclosure, an embodiment of a system for controlling a fuel cell is also provided. The method for controlling a fuel cell in the first embodiment of the present disclosure may be performed in the system provided in the third embodiment of the present disclosure.

Fig. 8 is a schematic diagram of the system for controlling a fuel cell according to an embodiment of the present disclosure. As shown in Fig. 8, the system includes a fuel cell 601 and a controller 603.

The fuel cell 601 is configured to, after a rail vehicle is powered on, power an auxiliary system of the rail vehicle.

The controller 603 is configured to detect an operating power of a target object, and when it is detected that the operating power of the target object is lower than the predetermined power, turn off at least one fuel cell or turn off the cell component in any one or more fuel cells according to a gas conversion range corresponding to the fuel cell, wherein the gas conversion range is an output power range value, of the fuel cell, corresponding to the preset range value of the hydrogen conversion rate of the fuel cell. The target object is powered by at least two fuel cells.

From the above, in the above embodiment of the application, the operating power of the target object (the electrical appliance) is detected, and when the target object (the electrical appliance) runs in the low power state, one or more fuel cells powering it are turned off, and the output power of the rest fuel cells is improved; moreover, in order to reduce the number of times of the whole fuel cell, the cell component in one or more fuel cells may be selected and turned off. In this way, the purpose that the output power of each fuel cell in the power supply state is high is achieved, thereby achieving the technical effect of improving the hydrogen conversion rate of the fuel cell and reducing the power consumption of the fuel cell, and solving the technical problem in the related art of low hydrogen conversion rate of the fuel cell in the case of low power of the electrical appliance caused by the fact that the automatic control cannot be implemented on a plurality of fuel cells according to the operating power of the electrical appliance.

In an exemplary embodiment, the controller 603 is further configured to, in the case of turning off at least one fuel cell or turning off the cell component in any one or more fuel cells according to the gas conversion range corresponding to the fuel cell, improve the output power of other fuel cells or cell components which are not turned off.

In an exemplary embodiment, the controller 603 is further configured to, after at least one fuel cell is turned off or the cell component in any one or more fuel cells is turned off according to the gas conversion range corresponding to the fuel cell, continue detecting the operating power of the target object, and when it is detected that the operating power of the target object is higher than the predetermined power, recover the fuel cell or the cell component which is turned off, and control the fuel cell to power evenly.

In an exemplary embodiment, the controller 603 is further configured to read the current operating power of the target object and the gas conversion range corresponding to the fuel cell, calculate, according to the current operating power of the target object and the gas conversion range, the turning-off number of the fuel cells needing to be turned off, and select, according to the turning-off number of the fuel cells, at least one fuel cell from the plurality of fuel cells as the fuel cell to be turned off. The average power of the fuel cell continuing working is in the gas conversion range, and the gas conversion range is the high conversion range of the conversion rate of the gas input to the fuel cell.

In another exemplary embodiment, the controller 603 is further configured to calculate, according to the current operating power of the target object and the gas conversion range, the turning-off number of the cell components needing to be turned off, and select, according to the turning-off number of the cell components, at least one fuel cell from a plurality of fuel cells as the cell component to be turned off. The average power of the fuel cell of the cell component to be turned off is in the predetermined range, which is the high conversion range of the conversion rate of the gas input to the fuel cell.

It is to be noted that the controller 603 is further configured to turn off the assistant device of the whole fuel cell while turning off the whole fuel cell; the processing component is further configured to, in the case of turning off the cell component in the fuel cell, not turn off the assistant device of the fuel cell or reduce the operating power of the assistant device of the fuel cell.

In an exemplary embodiment, the controller 603 is further configured to, after a predetermined period, turn on and off the fuel cell or the cell component again.

According to the present embodiment, a rail vehicle is also provided, which includes any above alternative system for controlling a fuel cell.

Each of function elements provided in the embodiments of the application may run in a mobile terminal, a computer terminal or similar operating devices, and may also be stored as a part of storage media.

So, the embodiments of the present disclosure may provide a computer terminal. The computer terminal may be any computer terminal device in a group of computer terminals. Alternatively, in the present embodiment, the computer terminal may also be replaced with the mobile terminal and other terminal devices.

Alternatively, in the present embodiment, the computer terminal may be in at least one of multiple network devices of a computer network.

In the present embodiment, the computer terminal may perform program codes of the following steps in the method for controlling a fuel cell: an operating power of a target object is detected, wherein the target object is powered by at least two fuel cells; when it is detected that the operating power of the target object is lower than the predetermined power, at least one fuel cell is turned off or the cell component in any one or more fuel cells is turned off according to a gas conversion range corresponding to the fuel cell. The gas conversion range is an output power range value, of the fuel cell, corresponding to a preset range value of the hydrogen conversion rate of the fuel cell.

Alternatively, the computer terminal may include: one or more than one processor, a memory and a transmission device.

The memory may be configured to store a software program and component, for example, a program instruction/component corresponding to the method and device for controlling a fuel cell in the embodiments of the present disclosure; the processor executes various function applications and data processing by running the software program and component stored in the memory, namely implementing the method for controlling a fuel cell. The memory may include a high-speed RAM, and may also include a nonvolatile memory, for example, one or more than one magnetic storage device, a flash memory, or other nonvolatile solid state memory. In some examples, the memories may further include memories remotely set relative to the processor, and these remote memories may be connected to the terminal through the network. The examples of the network include, but not limited to, Internet, Intranet, LAN, mobile communication networks and a combination of them.

The transmission device is configured to receive or send data via a network. The specific examples of the network may include a wired network and a wireless network. In an example, the transmission device includes a Network Interface Controller (NIC), which may be connected with other network devices and routers through network cables to communicate with the Internet or the LAN. In an example, the transmission device is a Radio Frequency (RF) component, which is configured to communicate with the Internet wirelessly.

As at least one alternative embodiment, the memory is configured to store information of a preset action condition and a preset permission user, and an application program.

The processor may call through the transmission device the information and the application program stored in the memory, so as to execute the program codes of the steps in each alternative or preferred embodiment of the method.

Those of ordinary skill in the art may understand that the computer terminal may also be the smartphone (such as the Android phone and the iOS phone), the tablet PC, the IPDA, the MID, the PAD and other terminal devices.

Those of ordinary skill in the art may understand that all or part of the steps in the method of the above embodiments may be performed by hardware related to the terminal devices instructed by a program. The program may be stored in computer readable storage media. The storage media may include: a flash disk, a Read-Only Memory (ROM), an Random Access Memory (RAM), a magnetic disk or a compact disc.

The embodiments of the present disclosure also provide a storage medium. Alternatively, in the present embodiment, the storage medium may be configured to store the program codes executed by the method for controlling a fuel cell which is provided by the embodiment of the method and the embodiment of the device.

Alternatively, in the present embodiment, the storage medium may be in any one of a group of computer terminals in a computer network, or any one of a group of mobile terminals.

Alternatively, in the present embodiment, the storage medium is configured to store the program codes for performing the following steps: an operating power of a target object is detected, wherein the target object is powered by at least two fuel cells; when it is detected that the operating power of the target object is lower than the predetermined power, at least one fuel cell is turned off or the cell component in any one or more fuel cells is turned off according to a gas conversion range corresponding to the fuel cell. The gas conversion range is an output power range value, of the fuel cell, corresponding to a preset range value of a hydrogen conversion rate of the fuel cell.

Alternatively, in the present embodiment, the storage medium may be further configured as the program codes of the steps in each alternative or preferred embodiment of the method for controlling a fuel cell.

The method and device for controlling a fuel cell according to the present disclosure are exemplarily described above with reference to the accompanying drawings. However, those skilled in the art should understand that for the method and device controlling a fuel cell presented in the present disclosure, various improvements may also be made on the basis of not departing from the contents of the present disclosure. Therefore, the protection scope of the present disclosure should be determined by the contents of the claims attached.

The sequence numbers of the embodiments of the present disclosure are just for describing, instead of representing superiority-inferiority of the embodiments.

In the above embodiments of the present disclosure, the descriptions of the embodiments focus on different aspects. A part which is not described in a certain embodiment in detail may refer to the related description of the other embodiments.

In the several embodiments provided in the application, it should be understood that the technical contents disclosed may be realized in other ways. The embodiment of the device described above is only schematic; for example, the division of the elements is only a division of logical functions, and there may be other dividing modes during the actual implementation, for example, multiple elements or components may be combined or integrated to another system, or some features may be ignored or are not executed. In addition, coupling, direct coupling, or communication connection shown or discussed may be implemented through indirect coupling or communication connection of some interfaces, elements or components, and may be in an electrical form or other forms.

The elements described as separate parts may be or may not be separate physically. The part shown as the element may be or may not be a physical element, that is to say, it may be in a place or distributed on multiple network elements. It is possible to select, according to the actual needs, part or all of the elements to achieve the objective of the solutions in the present disclosure.

Moreover, all the function elements in the embodiments of the present disclosure may be integrated in a processing element; or the elements exist separately and physically; or two or more than two elements are integrated in an element. The integrated element may be realized in form of hardware or in form of software function element.

If the integrated element is implemented by software function components, and the software function components are sold or used as independent products, they can also be stored in a computer readable storage medium. Based on this understanding, the technical solution of the embodiments of the present disclosure substantially or the part making a contribution to the conventional art can be embodied in the form of software product; the computer software product is stored in a storage medium, and includes a number of instructions to make a computer device (which may be a personal computer, a server or a network device, etc.) perform all or part of steps of the method in each embodiment of the present disclosure. The storage media include a USB flash disk, an ROM, an RAM, a mobile hard disk, a magnetic disk, a compact disc, and other media capable of storing the program codes.

The above is only the preferred embodiments of the present disclosure; it should be indicated that, on the premise of not departing from the principles of the present disclosure, those of ordinary skill in the art may also make a number of improvements and supplements, and these improvements and supplements should fall within the protection scope of the present disclosure.

## Claims

1. A method for controlling a fuel cell, comprising:
detecting an operating power of a target object, wherein the target object is powered by at least two fuel cells;
when it is detected that the operating power of the target object is lower than a predetermined power, turning off at least one fuel cell or turning off a cell component in any one or more fuel cells according to a gas conversion range corresponding to a fuel cell, wherein the gas conversion range is an output power range value, of the fuel cell, corresponding to a preset range value of a hydrogen conversion rate of the fuel cell.

2. The method as claimed in claim 1, wherein when turning off the at least one fuel cell or turning off the cell component in any one or more fuel cells according to the gas conversion range corresponding to the fuel cell, improving an output power of other fuel cells which are not turned off, or improving an output power of other cell components which are not turned off.

3. The method as claimed in claim 1, wherein after turning off the at least one fuel cell or turning off the cell component in any one or more fuel cells according to the gas conversion range corresponding to the fuel cell, the method further comprises:
continuing to detect a operating power of the target object;
when it is detected that the operating power of the target object is higher than the predetermined power, recovering the fuel cell which is turned off, or recovering the cell component which is turned off; and controlling fuel cells to power evenly.

4. The method as claimed in any one of claims 1 to 3, wherein a plurality of fuel cells are used to power the target object; before turning off the at least one fuel cell, the method further comprises:
reading a current operating power of the target object and a gas conversion range corresponding to a fuel cell;
according to the current operating power of the target object and the gas conversion range, calculating the turning-off number of fuel cells needing to be turned off;
selecting, according to the turning-off number of the fuel cells needing to be turned off, at least one from the plurality of fuel cells as a fuel cell to be turned off, wherein an average power of a fuel cell continuing working is in the gas conversion range, and the gas conversion range is a high conversion range of a conversion rate of a gas input to the fuel cell.

5. The method as claimed in any one of claims 1 to 3, wherein when a plurality of fuel cells are used to power the target object and a whole fuel cell is forbided being turned off , before turning off the cell component in one or more fuel cells, the method further comprises:
reading a current operating power of the target object and a gas conversion range corresponding to a fuel cell;
according to the current operating power of the target object and the gas conversion range, calculating the turning-off number of the cell components needing to be turned off;
selecting, according to the turning-off number of the cell components needing to be turned off, at least one cell component from each fuel cell as the cell component to be turned off, wherein an average power of a fuel cell of the cell component continuing working is in a predetermined range, and the predetermined range is a high conversion range of a conversion rate of a gas input to the fuel cell.

6. The method as claimed in claim 1, wherein while turning off a whole fuel cell, turning off an auxiliary device of the whole fuel cell; when turning off the cell component in the fuel cell, not turning off an auxiliary device of the fuel cell or reducing an operating power of the auxiliary device of the fuel cell.

7. The method as claimed in claim 1, wherein after turning off the at least one fuel cell or turning off the cell component in any one or more fuel cells according to the gas conversion range corresponding to the fuel cell, the method further comprises:
after a predetermined period, turning on the fuel cell which is turned off again, or turning on the cell component which is turned off again.

8. A device for controlling a fuel cell, comprising:
a detecting component, configured to detect an operating power of a target object, wherein the target object is powered by at least two fuel cells;
a tuning-off component, configured to, when it is detected that the operating power of the target object is lower than a predetermined power, turn off at least one fuel cell or turn off a cell component in any one or more fuel cells according to a gas conversion range corresponding to a fuel cell, wherein the gas conversion range is an output power range value, of the fuel cell, corresponding to a preset range value of a hydrogen conversion rate of the fuel cell.

9. A system for controlling a fuel cell, comprising:
a fuel cell, configured to, after a rail vehicle is powered on, power an auxiliary system of the rail vehicle; and
a controller, configured to detect an operating power of a target object, and when it is detected that the operating power of the target object is lower than a predetermined power, turn off at least one fuel cell or turn off a cell component in any one or more fuel cells according to a gas conversion range corresponding to a fuel cell, wherein the gas conversion range is an output power range value, of the fuel cell, corresponding to a preset range value of a hydrogen conversion rate of the fuel cell;
wherein the target object is powered by at least two fuel cells.

10. A rail vehicle, comprising the system for controlling the fuel cell as claimed in claim 9.
